**Europäisches Patentamt**

**European Patent Office**

**Office européen des brevets**

(11) Publication number: **0 039 466**
**A1**

(12) **EUROPEAN PATENT APPLICATION**

(21) Application number: **81103184.8**

(22) Date of filing: **28.04.81**

(51) Int. Cl.³: **B 64 D 25/14**

---

(30) Priority: **01.05.80 US 145527**

(43) Date of publication of application: **11.11.81**
**Bulletin 81/45**

(84) Designated Contracting States: **DE FR GB NL**

(71) Applicant: **The B.F. GOODRICH Company,**
**Dept. 0015 WHB-6 500 South Main Street, Akron,**
**Ohio 44318 (US)**

(72) Inventor: **Fisher, John Melvin, 622 Sackett Avenue,**
**Cuyahoga Falls Ohio 44221 (US)**

(74) Representative: **von Kreisler, Alek et al, Deichmannhaus**
**am Hauptbahnhof, D-5000 Köln 1 (DE)**

---

(54) **Escape slide with multiple inflation units.**

(57) Individual gas generator-turbine fan inflation units (33, 36) are mounted on a wall of each of the inflatable systems (18, 19) of a foldable inflatable article such as an escape slide (10). The article is foldable into a compact package for storage in a limited space. Each of the inflation units (33, 36) is mounted directly on a wall of each of the inflatable systems and may be packed with the wall. A lanyard (67, 86) for each of the inflation units extends out of the folded package to an elevated support (12) for actuation of the units by gravity trip upon opening and dropping of the article from the elevated support so as to provide substantially simultaneous inflation of all inflatable systems.

## ESCAPE SLIDE WITH
## MULTIPLE INFLATION UNITS

### BACKGROUND OF THE INVENTION

A turbine fan and gas bottle assembly for inflating an escape slide is shown and described in U.S. Patent No. 3,840,057 assigned to the assignee of this application. With high pressure bottles of this type, periodic inspection is required to determine if the pressure is maintained in the bottle. One method used is to visually inspect a pressure gauge on the bottle. This has not been possible when the bottle is packed with the escape slide and in that case an electrical pressure indicating device has been used to transmit a signal from the bottle to an indicator outside the packed slide. Difficulties have been experienced with this device due to malfunctions which have caused the indicator to register a lack of pressure in the bottle when in fact the pressure was being maintained at the required level.

There have also been problems with slides having two or more inflatable systems which are simultaneously inflated by one gas reservoir connected to the different systems by hoses. One problem has been with kinking and twisting of the hoses. Another problem has been providing check valves for retaining inflating gases in the remaining systems in the event one or more of the systems are ruptured.

With escape slide-life raft combinations, there has also been a problem providing a positive closure lid for the fan to prevent wave impact on the internal flapper valve utilized in air augmentation devices.

The weight and space limitations placed on escape slides have caused other problems because the bottles containing high pressure gases have been of relatively heavy construction to safely contain the high pressure gas. In addition to the added weight, the bottles have required substantial space. Pressure reducers have also been needed between the bottles and the turbine.

## SUMMARY OF THE INVENTION

An escape slide assembly in accordance with one aspect of this invention provides a relatively lightweight gas generator-turbine fan unit for each inflatable system in the slide. Each gas generator-turbine fan is an integral unit attached directly to the system it inflates and may be packed with the slide without the necessity of having a pressure inspection device or hoses connected to a single gas reservoir. Pressure reducers and check valves are also not needed. The generator is of relatively small size and light-wight construction because it produces the gas by a chemical reaction and the pressures developed within the generator are not as high as the pressure of the same quantity of gas stored in a bottle. In this escape slide assembly, the gas generator-turbine fan unit for each inflatable system is mounted directly on a wall of one of the inflatable tubes of the system and is folded into the compact package with the system for storage. The lanyards for the gas generators are connected to part of the aircraft so that upon release of the folded slide the weight of the slide will place the lanyards in tension and release the firing pins of the gas generators.

## BRIEF DESCRIPTION OF THE DRAWINGS

Fig. 1 is a partially schematic side elevation of an escape slide and life raft assembly mounted on an aircraft floating in the water after ditching with the multiple inflatable systems of the slide inflated and extended.

Fig. 2 is a cross-sectional view taken along the plane of line 2-2 in Fig. 1.

Fig. 3 is an enlarged elevation of an inflation unit for one of the inflatable systems taken along the plane of line 3-3 in Fig. 2.

Fig. 4 is a sectional view taken along the plane of line 4-4 in Fig. 3 with parts being broken away and showing the check valve and lid in dotted lines in the open position.

Fig. 5 is a fragmentary view in perspective showing the packing of the inflation units with the slide walls.

Fig. 6 is a side elevation like Fig. 1 showing the slide at the time it is ejected from the aircraft and the inflation units dropped for extending the lanyards to fire the gas generators by gravity trips.

Fig. 7 is a front elevation showing the slide in the condition of Fig. 6.


DETAILED DESCRIPTION

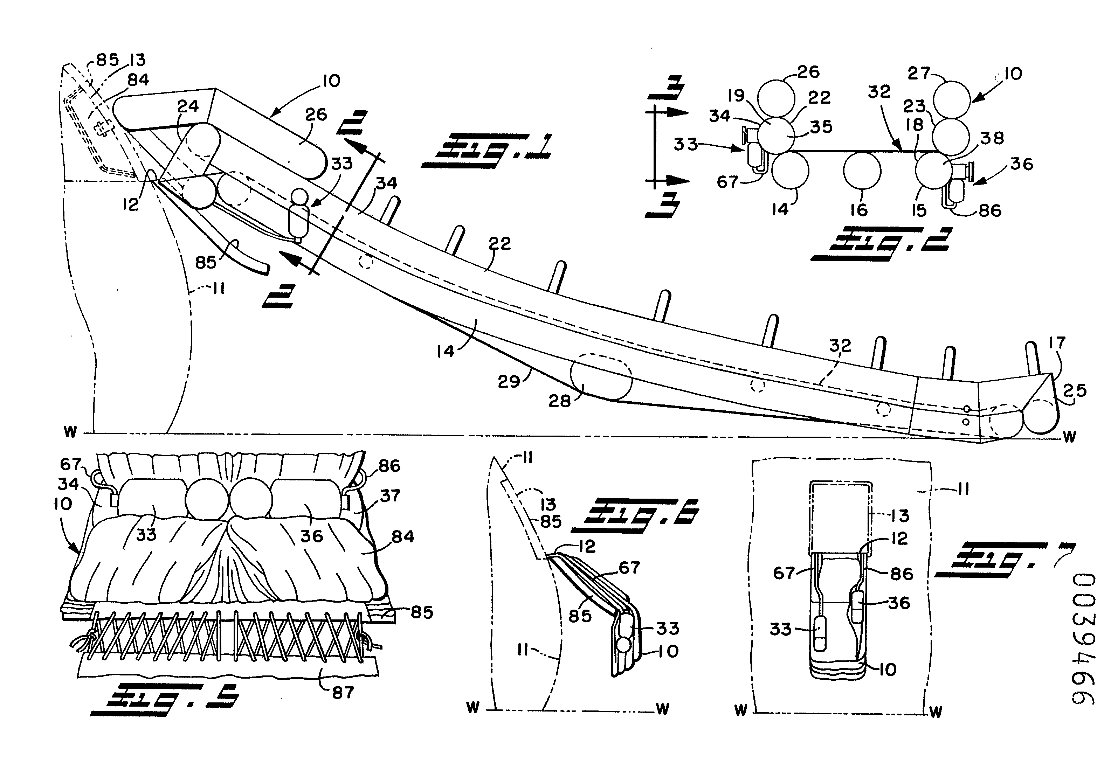

Referring to Figs. 1 and 2, an inflatable article such as multitubular inflatable escape slide 10 is shown schematically in the inflated condition in position for evacuating passengers from an elevated support such as an aircraft having a fuselage 11 shown schematically in chain-dotted lines in Figs. 1, 6 and 7. The escape slide 10 is shown in a position for evacuating passengers from the aircraft with the fuselage 11 partially submerged in water after the aircraft has been ditched. The waterline is indicated by line W-W in Figs. 1, 6 and 7. The escape slide 10 in the inflated condition has a generally horizontal platform 12 at the girt end which is fastened to the fuselage 11 at a doorway 13 in the fuselage. As shown in Figs. 1 and 2, the escape slide 10 has a multitubular construction including a left-hand lower side tube 14, a right-hand lower side tube 15 and a central main tube 16, all of which extend longitudinally of the escape slide from the platform 12 to a toe end 17 of the escape slide. The side tubes 14,15 and the central main tube 16 may be connected by separating tubes (not shown) and form a lower independent inflatable system 18.

The escape slide 10 also has an upper inflatable system 19 which includes longitudinally extending left-hand upper side rail tube 22 mounted on top of the left-hand lower side tube 14 and a right-hand upper side rail tube 23 mounted on top of the right-hand lower side tube 15. The side rail tubes 22 and 23 are connected by U-shaped tubes 24 and 25 at the upper and lower ends of the escape slide 10. Also included in the upper inflatable system 19 are handrail tubes 26 and 27 mounted on top of the side rail tubes 23 and 24.

Included in the lower inflatable system 18 may be truss tubes 28 fastened to the undersides of the lower side tubes 14,15 and the central main tube 16 at positions approximately one-half the length of the escape slide 10 from the ends of the slide. Elongated longitudinally extending slide reinforcing tension members in the form of straps 29 engage the lower surface of the truss tubes 28 and are fastened to the underside of the slide at positions near the ends. A center slide panel 32 is fastened to the lower side tubes 14 and 15 and to the central main tube 16 providing a slide surface on which the passengers may slide to the toe end 17 during evacuation of the aircraft.

The escape slide 10 has the separate lower inflatable system 18 and upper inflatable system 19 so that during inflation or operation of the slide if one of the systems is damaged, the slide will still be operable with the other system. It is understood that although two inflatable systems 18 and 19 are illustrated in this application a slide may be divided into additional separate systems where desired. With reference to the upper inflatable system 19, an in individual inflation unit such as a gas generator-turbine fan inflation unit 33 is mounted on a flexible wall 34 of the left-hand upper side rail tube 22 which surrounds an inflatable chamber 35.

The escape slide 10 may be constructed of a suitable flexible material such as square-woven nylon fabric impregnated with neoprene to retain air or other inflation medium in the inflatable parts. The straps 29 and the slide panel 32 may also be of square-woven nylon and adhered to the slide 10 by a suitable adhesive. The inflatable tubes of the inflatable systems 18 and 19 may be of a nylon fabric which is stretchable at the inflation pressure of three pounds per square inch (0.21 kilograms per square centermeter) for operation of the escape slide 10 but contractible at lower pressures to reduce the volume of the assembly.

A second gas generator-turbine fan inflation unit 36 is mounted on a flexible wall 37 of the right-hand lower side tube 15 which surrounds an inflatable chamber 38 of the lower inflatable system 18.

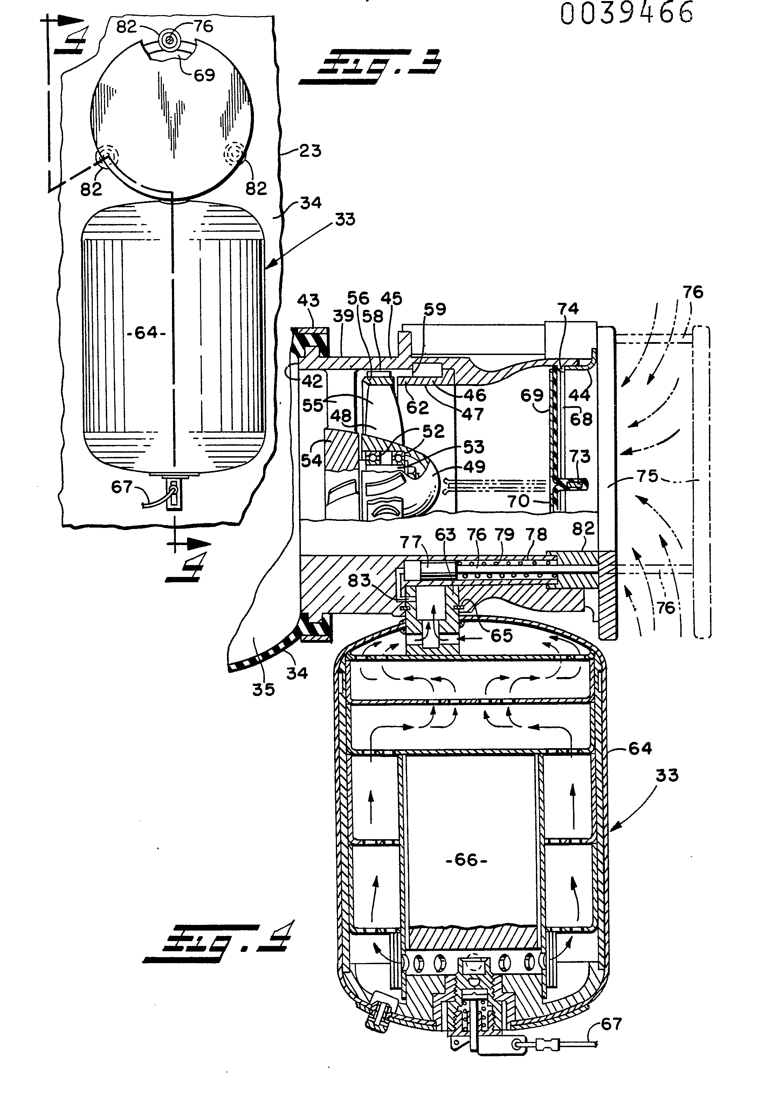

The following description of the gas generator-turbine fan inflation unit 33 for the upper inflatable system 19 also applies to the second gas generator-turbine fan inflation unit 36 except that the second gas generator-turbine fan inflation unit is for inflating the lower inflatable system 18. Referring to Figs. 3 and 4, the gas generator-turbine fan inflation unit 33 includes a cylindrical conduit such as tube 39 having a delivery end 42 extending through the flexible wall 34 into the chamber 35 and clamped to the wall by a clamping ring 43. Opposite the delivery end 42 is a throat end 44 for receiving ambient air. An outer wall 45 of the tube 39 is concentric and extends around an inner tubular member such as cylinder 46 surrounding an inner passage 47. A turbine fan 48 having a hub 49 rotatably mounted on bearings 52 supported by shaft 53 of a stator 54 is mounted in the inner passage 47. The stator 54 has stator vanes 55 extending to the outer wall 45 for supporting the stator and for directing the inflating fluid into the escape slide upper inflatable system 19.

The turbine fan 48 has fan blades 60 extending from the hub 49 to an impeller ring 56 in spaced-apart relationship with the outer wall 45 to provide with the cylinder 46 an outer passage 57 in the tube 39. Impeller blades 58 are mounted on the outer surface of the impeller ring 56 for receiving gas directed through orifices 59 in a nozzle ring 62 between the outer wall 45 and cylinder 46. A rigid tubular support member such as connecting tube 63 in the outer wall 45 is provided for passage of high pressure fluid into the outer passage 57 and is part of a gas generator 64 integrally attached to the turbine fan tube 39 as by a snap ring 65.

The gas generator 64 is a solid state nitrogen-generating unit producing gas at from 300 to 500 pounds per square inch (21.1 to 35.2 kilograms per square centimeter). The gas is generated in a chamber 66 near the center of the generator and flows generally along the paths shown schematically by the arrows in Fig. 4 to the connecting tube 63 for passage into the turbine fan tube 39. The gas generator 64 is activated by pulling a lanyard 67 connected to a pin in a firing unit which is released when the pin is pulled. The nitrogen gas which is ejected through the tube 63 into the outer passage 57 through the orifices 59 and against the impeller blades 58 causes the turbine fan 48 to pump ambient air through the inner passage 47 and into the escape slide 10.

As shown in Fig. 4, the opening at the throat end 44 is opened to the atmosphere and a source of ambient air. A one-way valve 68 is provided for closing the tube 39 when the inflation system is not in operation and also when the escape slide 10 is fully inflated. The valve 68 has a pair of semicircular flaps 69 and 70 which are resiliently mounted on a beam 73 extending across the mouth of the tube 39 to urge the flaps into the position shown in full lines in Fig. 4 abutting a flange 74 projecting radially inward from the outer wall 45 of the tube 39. When the turbine fan 48 is in operation and the escape slide 10 is not inflated, the flaps 69 and 70 will be urged into the position shown in dot-dash lines in Fig. 4 to permit the ambient air to be pumped through the inner passage 47.

Upstream of the turbine fan 48 and one-way valve 68 is a spring-loaded cover or closure lid 75 which may be installed to prevent wave impact on the one-way valve. The closure lid 75 is mounted on piston rods 76 connected to pistons 77 slidably mounted in circumferentially spaced cylinders 78. Springs 79 are positioned in the cylinders 78 between the pistons 77 and caps 82 for urging the closure lid 75 into the closed position shown in solid lines in Fig. 4. During operation of the generator 64, the nitrogen gas is directed through passages 83 to each of the cylinders 78 to urge the closure lid 75 away from the throat end 44 into the position shown in dotted lines in Fig. 4.

As shown in chain-dotted lines in Fig. 1, the escape slide 10 including the gas generator-turbine fan inflation units 33 and 36 is packed in a compact package 84 on a packboard which may be the back of a door 85 in the fuselage 11. As shown in Fig. 5, the escape slide 10 may be packed with the flexible walls 34 and 37 in a folded condition and the gas generator-turbine fan inflation units 33 and 36 packed along with the walls in an end-to-end position. The lanyard 67 of inflation unit 33 and a lanyard 86 of the inflation unit 36 extend outwardly from the package 84 for connection to the girt at the platform 12. The complete package 84 after folding of the escape slide 10 is held in position by a cover 87 with quick-release attachments (not shown) which are actuated when the door 85 and package are swung into the position illustrated in Figs. 6 and 7.

Upon release of the cover 87, the folded parts of the escape slide 10 are dropped downward from the platform 12 into the position shown in Figs. 6 and 7 and the weight of the slide and gas generator-turbine fan inflation units 33 and 36 place the lanyards 67 and 86 in tension. This actuates the gas generators 64 and provides substantially simultaneous inflation of the lower inflatable system 18 and upper inflatable system 19. It is preferred that the gas generator-turbine fan inflation unit 33 be mounted on one side of the escape slide 10 and the second gas generator-turbine fan inflation unit 36 be mounted on the other side of the escape slide as shown in Figs. 2 and 7 to equalize the action of the lanyards 67 and 86 and also facilitate packing of the units in the end-to-end position as shown in Fig. 5.

After the inflation units 33 and 36 are actuated, the escape slide 10 will be extended and inflated to the condition shown in Fig. 1. During this inflation, the closure lid 75 will be extended to the position shown in dotted lines in Fig. 4 and the one-way valve 68 will be opened to the position shown in dotted lines in Fig. 4. When the escape slide 10 has been fully inflated, the spring 79 in the cylinder 78 will urge the piston 77 to the position shown in full lines in Fig. 4 and close the throat end 44 of the tube 39. The one-way valve 68 will also close with the flaps 69 and 70 moving into the position shown in full lines in Fig. 4. The escape slide 10 may then be released from the aircraft fuselage 11 and serve as a life raft.

It is understood that this invention is capable of other modifications and adaptions by those having ordinary skill in the art and is more particularly defined by the appended claims.

0039466

## CLAIMS

1. An inflatable article foldable into a compact package for storage having at least two inflatable systems with each of said systems having at least one flexible wall surrounding an inflatable chamber comprising an individual inflation unit mounted on said wall of each of said systems, said inflation unit including a turbine fan conduit having a delivery end for extending through said wall and a throat end for communication with ambient air, a fan in said conduit, a gas generator integrally attached to said fan conduit at a position between said throat end and said delivery end, said inflation unit of each of said systems being packed with said wall of each of said systems in said compact package, and means to actuate said gas generator of said inflation unit of each of said systems in response to unfolding of said article from said compact package for substantially simultaneous inflation of all of said inflatable systems.

2. An inflatable article in accordance with claim 1 wherein said means to actuate said gas generator includes a lanyard connected to an actuating apparatus on said gas generator and to an elevated support, said actuating apparatus being responsive to tension in said lanyard so that upon unfolding of said article said lanyard will be placed in tension by the weight of the released inflatable article and thereby actuate said gas generator.

3. An inflatable article in accordance with claim 1 wherein said article is an escape slide which has two of said inflatable systems foldable in side-by-side relationship and said inflation unit for one of said systems being packed adjacent said inflation unit for the other of said systems.

4. An inflatable article in accordance with claim 3 wherein one of said inflatable systems includes longitudinally extending inflatable side tubes at each side of said slide, the other of said inflatable systems includes longitudinally extending rail tubes mounted on top of each of said side tubes and said inflation unit for said one of said systems being mounted on the wall of one of said side tubes at one side of said slide and said inflation unit for said other of said systems being mounted on the wall of one of said rail tubes at the other side of said slide.

5. An inflatable article in accordance with claim 1 wherein said gas generator has a housing, said housing being connected to said fan conduit by a rigid tubular support member at a position to inject gas into said conduit for driving said fan and creating a pressure differential to draw ambient air into said conduit at said throat end and for ejection of said air and gas propelled by said fan out the delivery end of said conduit into said inflatable system.

6. An inflatable article in accordance with claim 5 wherein said fan conduit has a spring-loaded cover on said throat end, said cover being movable into an open position by extension of at least one piston and cylinder assembly and said piston and cylinder assembly being in communication with said tubular support member for extension of said piston-cylinder assembly by injection of gas from said gas generator.

7. An inflatable article in accordance with claim 6 wherein said fan conduit includes a check valve located at said throat end of said conduit, said check valve being resiliently closed to retain inflating gases in said article and being opened by the difference in pressure within said conduit and outside said conduit.

8. An inflatable article in accordance with claim 5 wherein said means to actuate said gas generator includes a lanyard connected to an actuating apparatus located on said housing at a position spaced from said tubular support member, said actuating apparatus being responsive to forces resulting from placing said lanyard in tension, and said article being foldable so that said lanyard of each said inflation unit extends out of said package and is connected to an elevated support so that upon unfolding of said article each said inflation unit will drop away from said elevated support and place said lanyard in tension for actuating said gas generator of said inflation unit of each of said systems.

9. An inflatable article in accordance with claim 8 wherein said article is foldable into a compact package on a packboard member connected to said elevated support and a cover member extends over said package and is releasably fastened to said packboard member for holding said article on said packboard in a compressed condition, and said lanyard of each of said inflation units extends from said actuating apparatus out of said package to said elevated support.

Fig.1

Fig.2

Fig.3

Fig.5

Fig.6

Fig.7

1/2

0039466

0039466

**Fig. 3**

82 76 69
23
34
33
-64-
67

43 56 45 59 74 76
39 58
42
55 46 69 44
48 62 47 68
54 52 73
53 75
49
70
77 63 76 79 78 82
83
65
35 34
64
-66-
33
67

**Fig. 4**

European Patent
Office

**EUROPEAN SEARCH REPORT**

0039466

Application number

EP 81 10 3184

## DOCUMENTS CONSIDERED TO BE RELEVANT

| Category | Citation of document with indication, where appropriate, of relevant passages | Relevant to claim |
|---|---|---|
| | US – A – 3 860 984 (FISHER) <br> * Column 1, lines 57-62; column 2, lines 35-55; column 3, lines 12-16, 64-68; column 4, lines 1-20; figures 3,9 * <br><br> -- | 1-4, 7-9 |
| | US – A – 3 840 057 (LESH) <br> * Column 1, lines 5-15, 29,30; column 2, lines 46-67; column 3, lines 1-31, 45-51; fi-gures 1,3,4 * <br><br> -- | 1,5,7 |
| | US – A – 2 761 617 (VAN ORNUM) <br> * Column 1, lines 30-46, 51-57; column 2, lines 30-54; figure 1 * <br><br> -- | 5 |
| | US – A – 3 463 287 (SMITH) <br> * Column 1, lines 31-34; column 2, lines 3-21, 57-72; column 3, lines 1-18; figures 1-3 * <br><br> -- | 1-3,8, 9 |
| | US – A – 3 465 991 (BANAS) <br> * Column 2, lines 59-64; column 3, lines 7-15; figures 1-3 * <br><br> -- | 1,2,8, 9 |
| A | US – A – 3 431 743 (GREEN) <br> * The whole document * <br><br> ---- | 1 |

**CLASSIFICATION OF THE APPLICATION (Int. Cl.³)**

B 64 D 25/14

**TECHNICAL FIELDS SEARCHED (Int. Cl.³)**

B 64 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-08-1981 | ZERI |

EPO Form 1503.1  06.78